(19) Europäisches Patentamt
European Patent Office
Office européen des brevets

(11) **EP 2 579 231 A1**

(12) **EUROPEAN PATENT APPLICATION**

(43) Date of publication:
**10.04.2013 Bulletin 2013/15**

(51) Int Cl.:
*G08G 1/16* (2006.01)   *B60K 31/00* (2006.01)
*G06T 7/00* (2006.01)

(21) Application number: **12185981.3**

(22) Date of filing: **25.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.10.2011 JP 2011221995**
**11.07.2012 JP 2012155413**

(71) Applicant: **Ricoh Company, Ltd.**
**Tokyo 143-8555 (JP)**

(72) Inventors:
• **Umezawa, Yuhko**
  **Ohta-ku, Tokyo 143-8555 (JP)**
• **Yokota, Soichiro**
  **Tokyo, Tokyo 143-8555 (JP)**

(74) Representative: **Maury, Richard Philip**
**Marks & Clerk LLP**
**90 Long Acre**
**London**
**WC2E 9RA (GB)**

(54) **Image processing apparatus for vehicle**

(57)    An image processing apparatus includes stereo cameras and detects a distance to a target around a vehicle. The image processing apparatus includes sensors installed in the vehicle; determines a vehicle situation by combining detection signals of the sensors and switches from image data of a stereo camera for driving assistance to image data of a stereo camera for door opening/closing assistance; carries out distortion corrections that are unique to the plural stereo cameras respectively on the selected image data so that correlation calculation common to the plural stereo cameras can be carried out; carries out the correlation calculation on two sets of image data of the single stereo camera; and detects the distance to the target by using a calculation result of the correlation calculation.

FIG.1

**Description**

<u>BACKGROUND OF THE INVENTION</u>

1. Field of the Invention

The present invention relates to an image processing apparatus that includes plural stereo cameras, and detects a distance to a target around a vehicle.

2. Description of the Related Art

Various sorts of driving assistance systems that assist drivers who drive the vehicles (cars) have been installed in vehicles. For example, a driving assistance system monitors in the forward facing direction from a vehicle using a camera that is installed at a front part of the vehicle, and measures distances to a pedestrian, another vehicle, an obstacle and so forth. Then, when there is a possibility of collision therewith, the system is capable of informing the driver of this matter, applying a brake to decelerate or stop the vehicle, and/or the like. Such a driving assistance system is generally called an "Advanced Safety Vehicle (ASV) unit".

Further, a door opening/closing assistance system is also known which informs a passenger of a vehicle whether a sufficient space is left for opening/closing a vehicle door or a luggage compartment door or gives a passenger a warning that another vehicle or a pedestrian is approaching from behind when the passenger is entering or exiting the vehicle.

In order to realize these systems, it is necessary to measure the distance to a target from a vehicle with high precision. A method is known of calculating a distance with high precision. In the known method, plural cameras installed at different positions (i.e., a compound-eye camera, referred to as a "stereo camera", hereinafter) are used to take photos of a target, and the distance is calculated using differences in positions (parallax) on sensors at which images are formed. Position detection devices that use stereo cameras have been used not only for vehicles but also for robots, security cameras, and so forth. This is because, different from distance measurement using a radar, millimeter waves or the like (in which the available range of irradiation may be limited, interference may occur with another radar, other millimeter waves or the like), it is possible to obtain distance information for a wide area, shapes and so forth by one time of photographing.

Plural stereo cameras are needed for realizing various driving assistance system and door opening/closing assistance system. However, a system using plural stereo cameras not only may require complicated control but also may be high-priced. Thus, a method of selecting from images of plural stereo cameras depending on the situation and reducing the cost by sharing stereo matching and/or a distance information generation part may be considered (see Patent Reference No. 1 (Japanese Laid-Open Patent Application No. 2003-348575)). Parent Reference No. 1 discloses a stereo vehicle exterior monitoring apparatus in which a selection from plural stereo cameras is carried out in a time division manner, and stereo matching and/or a distance information generation part are shared.

However, in such a method of carrying out selection from plural stereo cameras in a time division manner, an expensive processor having increased processing capability and/or many memories for image processing may be needed since the processing load may increase.

For example, in a case where plural stereo cameras are installed, there is a possibility that plural stereo cameras have different focal distances, field angles and/or distortions. That is, different lenses are used in cameras that are installed for the purposes of long-range distance measurement and short-range distance measurement. Thus, in order that the stereo camera system carries out distance measurement with high precision, not only selection from images of the respective stereo cameras but also image processing such as corrections depending on the focal lengths, field angles and/or distortions of the individual cameras are needed before correlation calculation is carried out. Thus, image processing for the corrections is to be carried out at high speed on images of the stereo cameras that has been selected in a time division manner. As a result, an expensive processor having increased processing capability and/or many memories for image processing may be needed, as mentioned above.

<u>SUMMARY OF THE INVENTION</u>

According to one aspect, an image processing apparatus has plural stereo cameras, and detects a distance to a target around a vehicle. The image processing apparatus further includes sensors installed in the vehicle; a situation judgment and image selection part that determines a vehicle situation by combining detection signals of the sensors and switches image data to be processed from image data photographed by a stereo camera for driving assistance to image data photographed by a stereo camera for door opening/closing assistance; a preprocessing part that carries out distortion corrections that are unique to the plural stereo cameras respectively on the image data selected by the situation judgment and image selection part so that a correlation calculation part can carry out correlation calculation that is common to the plural stereo cameras; the correlation calculation part that carries out correlation calculation on two sets of image data photographed by the single stereo camera; and a distance detection part that detects the distance to the target by using a calculation result of the correlation calculation part.

Other objects, features and advantages of the present invention will become more apparent from the following detailed description when read in conjunction with the accompanying drawings.

BRIEF DESCRIPTION OF THE DRAWINGS

FIG. 1 illustrates one example of an outline of a stereo camera system;
FIG. 2 schematically shows one example of positions at which three stereo cameras are installed;
FIG. 3 is one example of a hardware configuration of the stereo camera system;
FIG. 4 is one example of a functional block diagram of the stereo camera system;
FIG. 5 illustrates a principle of distance measurement using stereo cameras that are arranged in parallel;
FIG. 6 illustrates one example of selection of images based on situation judgments;
FIGs. 7A, 7B and 7C illustrate one example of processing a signal from a brake sensor and a brake frequency;
FIG. 8 schematically shows one example of directions of surrounding vehicles in a case where an occupant vehicle moves ahead and carries out parking and a direction of photographing by a stereo camera installed in the occupant vehicle;
FIG. 9 schematically shows one example of directions of surrounding vehicles during a traffic jam and a direction of photographing by a stereo camera installed in an occupant vehicle; and
FIG. 10 shows one example of a procedure of determining whether a vehicle is moving ahead to carry out parking or is in a normal driving state.

DETAILED DESCRIPTION OF THE EMBODIMENT

Below, an embodiment will be described using figures.

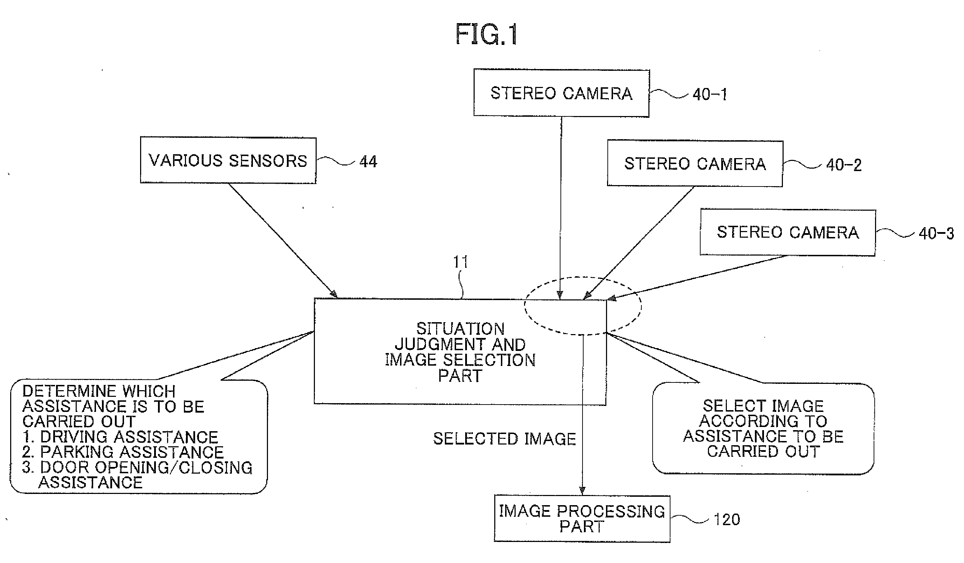

FIG. 1 illustrates one example of a stereo camera system according to an embodiment. Plural stereo cameras 40-1, 40-2 and 40-3 are installed in a vehicle. The stereo cameras 40-1, 40-2 and 40-3 are fixed in the vehicle (not shown) in such a manner that the stereo cameras 40-1, 40-2 and 40-3 photograph images in the same direction or different directions, respectively.
Further, various sensors are installed in the vehicle. The stereo camera system determines a situation of the vehicle from detection results of the various sensors. Then, according to the determination result, the stereo camera system determines which one of the following three assistances is to be carried out.

1. driving assistance
2. parking assistance
3. door opening/closing assistance

Then, the stereo camera system (in particular, a situation judgment and image selection part 11 in FIG. 1) determines which one(s) of the images photographed by the three stereo cameras 40-1, 40-2 and 40-3 is(are) to be output to an image processing part 120 (i.e., a preprocessing part 12 and so forth described later), depending a manner of the assistance to be carried out. Then, the image processing part 120 carries out distortion corrections unique to the respective plural stereo cameras according to the manner of the assistance to be carried out. Thus, it is possible to carry out correlation calculation common to the image(s) of the stereo cameras selected by the situation judgment and image selection part 11. By thus carrying out the correlation calculation common to the plural stereo cameras, it is possible to reduce the processing load of the processor and/or the image processing.
The respective assistances will be briefly described now.

1. Driving assistance:

For example, assistance in improving safety by detecting the distance to an obstacle such as another vehicle that runs ahead and carrying out a warning or automatic braking; assistance of detecting a white line(s) (a road mark (s) such as a line or points that separate(s) traffic lanes, a small projection, a reflecting object or the like) and/or the shoulder of a road, and preventing a vehicle from deviating from the traffic lane or the like corresponds to driving assistance. Any assistance other than parking assistance and door opening/closing assistance corresponds to driving assistance. Mainly, a stereo camera which photographs in a forward facing direction from the vehicle is used. However, various stereo cameras may be used depending on the specific contents of the assistance.

2. Parking assistance:

Assistance of, after the vehicle has been stopped, detecting the distance from a door to a target (a wall, a side surface of another vehicle or the like), an inclination of the surface thereof, a direction of the surface, and/or the like, and encouraging the driver to again carry out parking or the like corresponds to parking assistance. Mainly, stereo cameras that photograph in a forward facing direction and/or a lateral direction(s) from the vehicle are used.

In a case where it has been determined that the vehicle will move forward to carry out parking, the stereo camera system carries out assistance to enter a mode in which the stereo camera 40-1 and the stereo camera 40-2 or 40-3 (selected depending on whether the parking is right turn parking or left turn parking) are used alternately, a mode in which a white line(s) is(are) displayed on a display device (not shown), which line(s) is(are) used as a target of a parking position, or so.

3. Door opening/closing assistance:

Assistance of, after the vehicle has been parked, determining whether a door can be opened, controlling an opening degree of a door which can be opened in a case where the door can be opened, and/or the like. Mainly, a stereo camera(s) that photograph(s) in the corresponding lateral direction from the vehicle is(are) used.

[Configuration Example]

<Example of Installing Stereo Cameras>

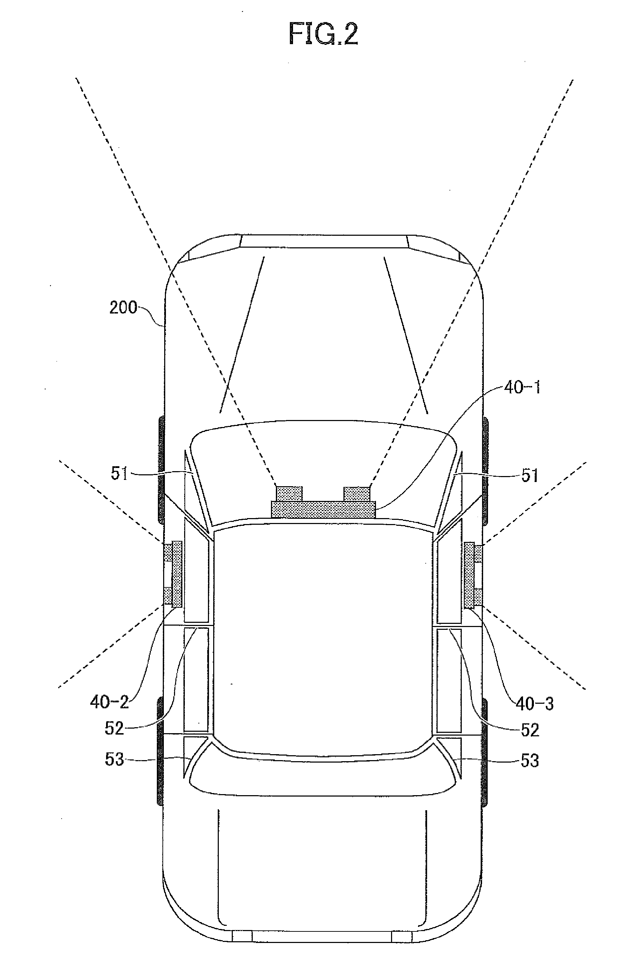

FIG. 2 schematically shows one example of positions at which the three stereo cameras are installed. The stereo camera 40-1 is put at a front part of the vehicle 200, the stereo camera 40-2 is put at a left side part viewed from a driver's seat, and the stereo camera 40-3 is put at a right side part viewed from the driver's seat. The stereo camera 40-1 is put on a rearview mirror in the inside of the vehicle or a bumper at the front part of the vehicle, in such a manner that its optical axis is pointed approximately horizontally in the forward facing direction from the vehicle. The stereo camera 40-2 is put on, for example, a right door mirror, a hollow in which a door knob is installed on a right side surface of the vehicle, a frame of a door window, an "A" pillar 51, a "B" pillar 52 a "C" pillar 53 or the like, for example, in such a manner that the optical axis is pointed in the right lateral direction from the vehicle or a direction that is inclined somewhat backward or forward from the right lateral direction from the vehicle. The stereo camera 40-3 is put on, for example, a left door mirror, a hollow in which a door knob is installed on a left side surface of the vehicle, a frame of a door window, an "A" pillar 51, a "B" pillar 52 a "C" pillar 53 or the like, for example, in such a manner that the optical axis is pointed in the left lateral direction from the vehicle or a direction that is inclined somewhat backward or forward from the left lateral direction from the vehicle.

The stereo camera 40-1 is used for driving assistance and also parking assistance. The stereo cameras 40-2 and 40-3 are used for parking assistance and door opening/closing assistance. However, as will be described later, a range to be covered by each stereo camera is increased depending on the field angle. Thus, the relationships between the assistance and the stereo cameras to be used therefor, respectively, are not necessarily fixed. The relationships between the assistance and the positions of the stereo cameras mentioned above are merely examples.

Further, a stereo camera for back guide monitoring may be installed around a rear number plate, a rear bumper or the like. That is, the number of stereo cameras to be used may be 4 or more. Optical characteristics such as the field angles, focal lengths, zooming functions and/or the like of the lenses of the stereo cameras may be such that the optical characteristics of the two lenses included in the same stereo camera should be equal to one another. However, the respective stereo cameras 40-1, 40-2 and 40-3 may have any optical characteristics. That is, stereo cameras having different optical characteristics such as lenses of wide field angles such as fisheye lenses, narrow field angles and/or the like may be used as the stereo cameras 40-1, 40-2 and 40-3.

The stereo camera 40-1 which is in a forward facing direction from the vehicle is used mainly for measuring the distance to a pedestrian, the distance to another vehicle that runs ahead, the distance to another feature (a road mark, a traffic light, a power pole, a guardrail or the like) or an obstacle. Image processing (for example, white line recognition, pedestrian recognition or so) other than measuring the distance to a target may be carried out using a luminance image of the stereo camera 40-1.

Further, in a case where the stereo camera 40-1 is used for parking assistance, the stereo camera 40-1 is used to detect the width of a space for determining whether there is such a room in a parking space sandwiched between two vehicles or walls that the vehicle can be parked, for example.

The stereo camera 40-1 may include plural stereo cameras that have different distance measurement ranges and/or photographing ranges which are installed in the same orientation and may be used for different purposes, respectively. In this case, each one of the stereo cameras 40-1, 40-2 and 40-3 has plural stereo cameras having different field angles and focal lengths.

Further, the plural stereo cameras 40-1 may be installed in different orientations. As an example of installing the plural stereo cameras 40-1 in different orientations, the stereo camera 40-1 may be installed in such a manner to monitor the complete periphery of the vehicle, the stereo camera 40-1 may be installed at a rear part to recognize the distance to a following vehicle and/or the like, in addition to installing the stereo camera 40-1 to face the front side so as to recognize the distance to a front target.

The stereo cameras 40-2 and 40-3 are used to recognize a human being or a thing that is approaching from around the vehicle when the driver or a passenger will open a door. It is noted that a "passenger" means an occupant of the vehicle other than the driver. Each of the driver and the passenger will be simply referred to as an "occupant" when the driver and the passenger are not distinguished therebetween.

The stereo cameras 40-2 and 40-3 measure the distance to an adjacent vehicle in a car park or so, and measures distances to a bicycle, a motor cycle and a pedestrian, approaching from the back side after the vehicle is parked. Thus, directions of targets to which the distances are to be measured are somewhat different, and thus, the stereo cameras 40-2 and 40-3 may use wide angle lenses. The stereo cameras 40-2 and 40-3 are used not only to determine whether a door can be opened/closed but also to determine a timing at which the door can be opened/closed. Thus, it is possible to achieve the two different purposes by using the single lens as a result of changing the distortion correction precision depending on the field angle. For example, such a distortion correction method may be used that, for a range of a narrow angle, distortion is corrected with high precision; and for a range of a wide angle, distortion is corrected with such a degree of precision that a target can be detected and a speed of the target can be calculated.

In addition to the stereo cameras 40-1, 40-2 and 40-3, a system that detects occupants and/or a system that recognizes occupants may be installed. For example, in a case of using an occupant detection camera, the occupant detection camera detects occupants (including an intruder who is not authorized), and detects the build(s), height(s), width(s) and/or the like of the passenger(s) and/or the driver.

A position of installing the occupant detection camera is a position such that it is possible to photograph the inside of the vehicle from the front side toward the rear side (for example, at a rearview mirror, a sun visor, the "A" pillar 51, the ceiling or the like), or a position such that it is possible to photograph the inside of the vehicle from the lateral side toward the front side (for example, at the "C" pillar 53, a rear seat door frame, the ceiling or the like). Further, it is also useful to install the occupant detection camera at a position such that it is possible to photograph from the lateral side toward the inside of the vehicle (for example, at a door, the "A" pillar 51, the "B" pillar 52 or the "C" pillar 53), and photograph the passenger(s) and/or the driver from the lateral side.

As a result of the occupant detection camera being thus used to obtain the builds, heights, widths and/or the like of the passenger(s) and/or the driver, it is possible to calculate a degree to which a door can be opened, as described later.

Further, by thus detecting the occupant(s), it is also possible to detect, in which seat(s) of the vehicle the passenger(s) and/or the driver is(are) riding. Thus, it is possible to estimate a door(s) which may be possibly opened and closed. Thus, it is possible to reduce the number of choices/options when one is to be selected from the plural stereo cameras.

The occupant detection camera may be a stereo camera of a monocular camera. In a case of a monocular camera, the build, height, width and/or the like of a human being can be detected by detecting the human being as a dynamic body to obtain information in various postures. In contrast thereto, in a case of a stereo camera, not only brightness information of an image but also distance information can be obtained. Thus, it is advantageous to separate/identify the passenger(s) or the driver and the other object(s) (for example, a seat, a window glass, in-vehicle equipment, and/or the like) with high precision.

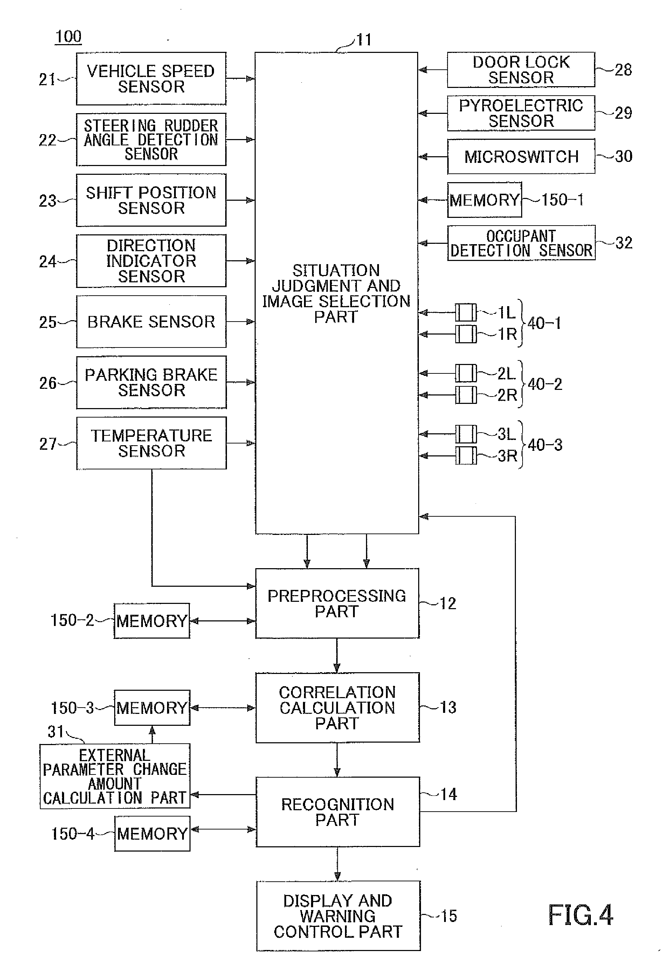

It is noted that the stereo cameras 40-1, 40-2 and 40-3 are calibrated using image data that is photographed by the respective pairs of cameras as calibration data, at a time of shipment or after being installed in the vehicle. That is, a Look Up Table (LUT) for geometric transform is previously generated for converting given image data in such a manner to minimize internal error causes concerning hardware of the pairs of cameras such as lens distortions, optical axis shifts, focal length shifts, distortions of the image pickup devices and so forth. Further, also a polynomial that will be described later may be used. The LUT and/or the polynomial are/is stored in a memory 150-2 of FIG. 4 (described later). The preprocessing part converts image data that has been input, using the LUT or polynomial, before carrying out correlation calculation.

<Hardware Configuration>

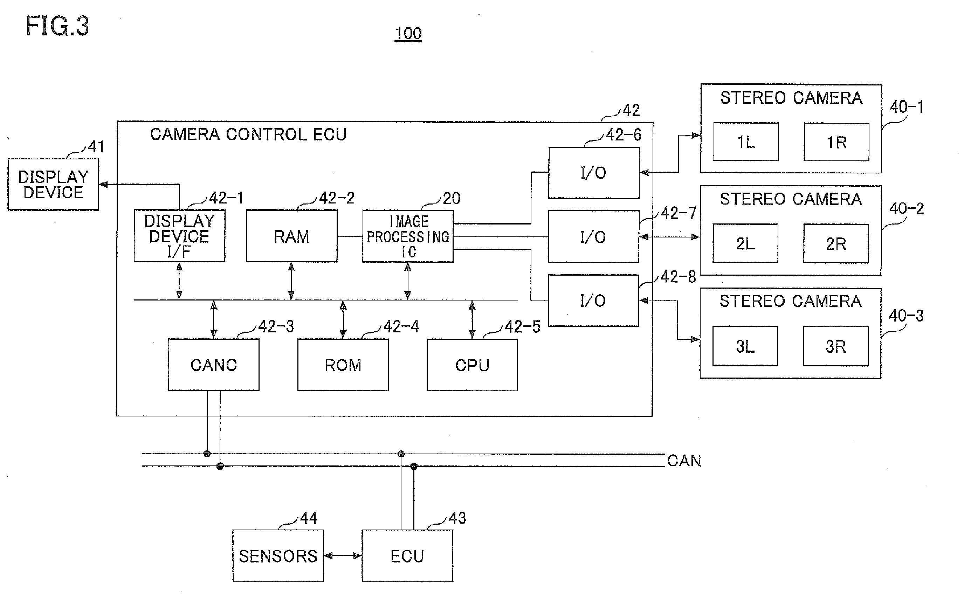

FIG. 3 shows one example of a hardware configuration of a stereo camera system 100. Many microcomputers are installed in a vehicle, and in many cases, one unit in which one or more microcomputers are installed may be called an Electronic Control Unit (ECU). As typical ECUs, an engine ECU that controls an engine, a brake ECU that controls a brake, a body ECU that controls doors, seats and/or the like, an information ECU that controls a navigation system, Audio and Video (AV) equipment and/or the like, and/or the like are known. An ECU 43 shown in FIG. 3 represents them.

Various sensors 44 and/or actuators (not shown) are connected to the ECU 43. The sensors and/or actuators that are connected to the ECU 43 are designed so as to be suitable to control the respective ECUs of the ECU 43 or convenient for being handled with a harness or the like, and thus, are not necessarily fixed ones. For example, to the engine ECU, an engine rotating speed sensor, a throttle position sensor, an air flow sensor, a water temperature sensor, an $O_2$ sensor and/or the like are connected. To the brake ECU, a vehicle speed sensor, a brake sensor, a master cylinder pressure sensor, a pump oil pressure sensor, a wheel cylinder pressure sensor and/or the like are connected. To the body ECU, a door lock sensor, a courtesy sensor and/or the like are connected.

The ECU 43 that is installed in a vehicle is connected in such a manner that communication is available via an in-vehicle LAN of a standard of Controller Area Network (CAN), FrexRay or the like. The ECU 43 transmits predetermined signals of the various sensors and/or processing results of the signals to the in-vehicle LAN. The data transmitted to the in-vehicle LAN can be read by all the ECUs of the ECU 43 connected to the in-vehicle LAN, and the respective ECUs of the ECU 43 receive predetermined data, and use the received data for data processing.

Also a camera control ECU 42 of FIG. 3 is connected to the in-vehicle LAN in a manner the same as or similar to that of the ECU 43, and can carry out communication with other ECUs. The camera control ECU 42 is connected with a display device 41 and the stereo cameras 40-1, 40-2 and 40-3. In the camera control ECU 42, one or more microcomputers are installed, has, the same as or similar to a common vehicle microcomputer, a CPU 42-5, a RAM 42-2, a ROM 42-4, a CAN Controller (CANC) 42-3 and I/Os 42-6, 42-7 and 42-8, and also has an image processing IC 20 for carrying out image processing. These are connected together by a system bus and/or an external bus and a bus controller.

The stereo cameras 40-1, 40-2 and 40-3 are connected to the I/Os 42-6, 42-7 and 42-8, respectively, and photographed image data is used by the image processing IC 20 to carry out image processing thereon using the RAM 42-2 if necessary. The CPU 42-5 executes a program stored in the ROM 42-4 using the RAM 42-2 as work memory, and carries out various sorts of control described later. The CANC 42-3 carries out communication with the ECU 43 based on CAN protocol. It is noted that the display device 41 is a display device using a liquid crystal, organic EL or the like, or using a Heads Up Display (HUD), for displaying pictures/images photographed by the stereo cameras 40-1, 40-2 and 40-3. The display device 41 is used to display, for example, a pedestrian and/or an obstacle detected through the image processing in a manner of emphasizing them(it). However, the display device 41 is not necessarily required. Further, in many cases, the display device 41 is also used as a display device of the navigation system that displays a road map.

It is noted that the stereo camera system 100 of FIG. 3 is installed in the vehicle 200 of FIG. 2 although the stereo camera system 100 is omitted in FIG. 2 for convenience of explanation.

<Functional Block Diagram>

FIG. 4 is one example of a functional block diagram of the stereo camera system 100. The stereo camera system 100 includes a situation judgment and image selection part 11, a preprocessing part 12, a correlation calculation part 13, a recognition part 14 and a display and warning control part 15. The situation judgment and image selection part 11 is connected to a vehicle speed sensor 21, a steering rudder angle detection sensor 22, a shift position sensor 23, a direction indicator sensor 24, a brake sensor 25, a parking brake sensor 26, a temperature sensor 27, a door lock sensor 28, a pyroelectric sensor 29, a microswitch 30, an occupant detection sensor 32, a memory 150-1, and the stereo cameras 40-1, 40-2 and 40-3.

The vehicle speed sensor 21 is a sensor that, for example, outputs a pulse each time a wheel is rotated a predetermined angle. The situation judgment and image selection part 11 can obtain the vehicle speed by counting the number of pulses received every unit period of time. The steering rudder angle detection sensor 22 detects the rudder angle as a result of light that is detected by a photodiode being blocked along with rotation of a steering shaft, for example. The shift position sensor 23 detects the position of a shift lever (P, N, D, R and/or the like), and outputs an electric signal according to the detected shift position. The direction indicator sensor 24 detects, for example, an operating direction of a turn signal switch of a swinging type (winker switch) that extends from a steering column. The brake switch 25 is a sensor that outputs an "on" signal when a brake pedal is pressed (stop lamp switch) or a sensor that detects the brake pedal being pressed using the master cylinder pressure. The temperature sensor 27 detects a temperature of the inside of the vehicle or the ambient temperatures of the stereo cameras 40-1, 40-2 and 40-3. The door lock sensor 28 detects the locked/unlocked state of each door. The pyroelectric sensor 29 receives infrared rays and outputs a voltage, and is set at a door opening lever, an internal door knob or the like. The pyroelectric sensor 29 detects that the passenger or the driver puts his or her hand on the door. Similarly, the microswitch 30 is set at the door opening lever, the internal door knob or the like and detects that the passenger or the driver puts his or her hand on the door. The occupant detection sensor 32 is a load sensor, an indoor camera or the like which is set at each of the driver's seat, the front passenger's seat, the rear center seat, the rear right seat and the rear left seat for detecting whether an occupant exists for each seat.

The situation judgment and image selection part 11 determines the running state of the vehicle based on a result of recognizing signals of the various sensors and image data photographed by the stereo cameras 40-1, 40-2 and 40-3. Further, the situation judgment and image selection part 11 carries out action prediction of the driver and/or the passenger(s) and selects the image data of one stereo camera from among the plural stereo cameras 40-1, 40-2 and 40-3.

The preprocessing part 12 carries out image processing on two sets of image data photographed by the stereo cameras 40-1, 40-2 and 40-3, respectively, so that the correlation calculation part 13 can carry out common correlation calculation.

The correlation calculation part 13 carries out correlation calculation on two sets of image data that have been processed by the preprocessing part 12. The recognition part 14 recognizes the target based on the calculation result of the correlation calculation. The display and warning control part 15 displays the recognition result on the display device 41, sounds an alarm or controls the brake or opening/closing of a door based on the recognition result.

[Principle of Detecting Distance Information of Stereo Camera]

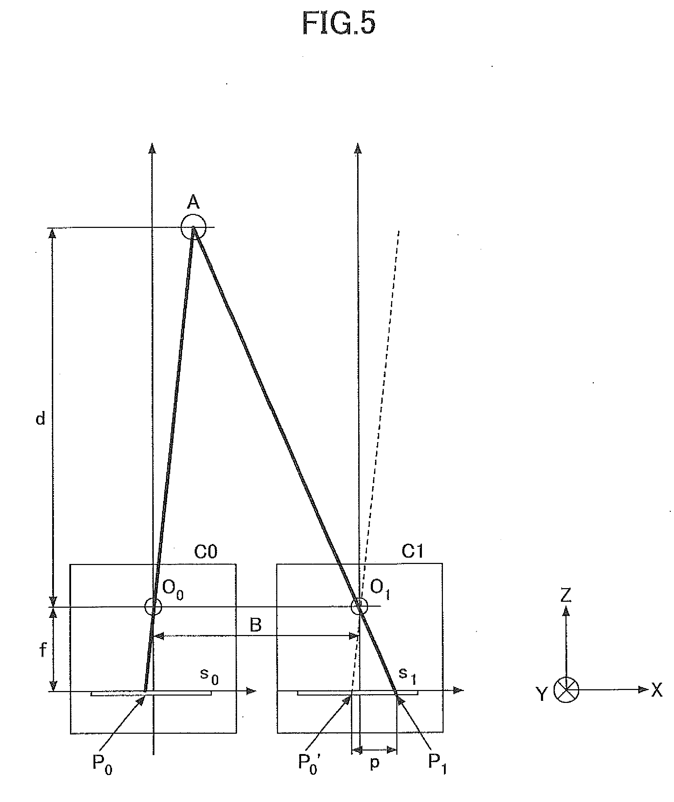

FIG. 5 illustrates the principle of distance measurement by a stereo camera in which cameras are arranged in parallel. Cameras C0 and C1 are installed with a distance B therebetween. The focal lengths, optical centers and image pickup planes of the cameras C0 and C1 are as follows:

Focal length (common): f
Optical Centers: $0_0$, $0_1$
Image Pickup Planes: $s_0$, $s_1$

An image of an object A that is at a position distant from the optical center $O_0$ of the camera C0 by a distance d is formed at a point $P_0$ that is the intersection between a straight line A-$O_0$ and the image pickup plane $s_0$. On the other hand, for the camera C1, the same object A is formed at a point $P_1$ on the image pickup plane $s_1$. The intersection between a straight line that passes through the optical center $O_1$ of the camera C1 and parallel to the straight line A-$O_0$ and the image pickup plane $s_1$ is referred to as a point $P_0$', and the distance between the point $P_0$' and the point $P_1$ is referred to as a distance p.

The point $P_0$' is the same position as the point $P_0$ in the camera C0. The distance p represents the shift in position on the images of the same object A photographed by the two cameras C0 and C1 and is called parallax.

The triangle A-$O_1$-$O_1$ and the triangle $0_1$-Pa' - $P_1$ are similar. Thus, the following equation can be obtained.

$$d = Bf/p$$

When the distance B (base-line length) between the two cameras C1, C0 and the focal length f are known, the distance d can be obtained from the parallax p.

In such an image forming optical system of a camera, an image of an object outside of the camera is projected onto an image pickup plane.

[Situation Judgment and Image Selection]

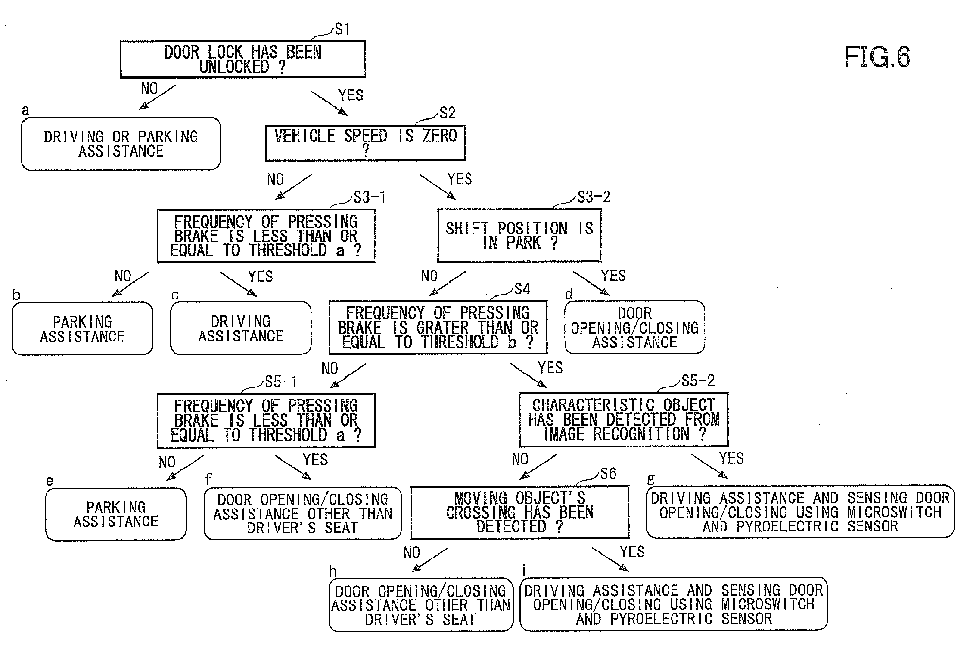

FIG. 6 illustrates one example of selection of images based on situation judgments. The situation judgment and image selection part 11 determines the running state of the vehicle and carries out action prediction as to what the passenger or the driver wishes to do and selects the image of one of the plural stereo cameras 40-1, 40-2 and 40-3 based on the determination (judgment) results.

In FIG. 6, the blocks of thin lines indicate selection results of assistance, and the blocks of thick lines indicate targets of situation judgments. The correspondences between the contents of assistance and the stereo camera(s) to be selected are as follows.

driving assistance: stereo camera 40-1
parking assistance: stereo cameras 40-1, 40-2 and 40-3
door opening/closing assistance: stereo cameras 40-2 and 40-3

The concept as to why the situation judgments of FIG. 6 are made will be described below.

<Timing of Situation Judgment and Image Selection>

In a case where assistance to be carried out is limited to door opening/closing assistance, driving assistance and parking assistance, a possibility that driving or parking assistance and door opening/closing assistance are required alternately within a short period time is very small. Thus, the time interval of carrying out situation judgment is shortened in a case where the vehicle speed is zero. In a case where the vehicle speed indicates a value greater than or equal to a threshold, the time interval of carrying out situation judgment is elongated. Each time interval may be measured by, for example, counting the number of frames photographed periodically (the number of sets of image data photographed by a single camera). Thus, in a case where the vehicle speed indicates a value greater than or equal to the threshold, the resources may be used for another purpose. It is also possible to carry out situation judgment and image selection every several frames constantly.

For example, there is a case where the stereo camera 40-1 for driving assistance may include plural stereo cameras for the forward facing direction, rear direction, lateral directions and/or the like. Thus, the situation judgment and image selection part 11 carries out a process such as that of selecting one stereo camera to be used for measuring a distance from among the plural stereo cameras in a case where the vehicle speed indicates a value greater than or equal to the threshold. Thus, it is possible to use the resources for the selection of a stereo camera.

<How to Select Stereo Camera>

In a case of selecting one stereo camera from among the plural stereo cameras 40-1, 40-2 and 40-3, one stereo camera may be selected at once. However, a method of narrowing down candidates is also effective, as will be described below. That is, first stereo cameras as candidates for distance measurement are extracted according to a situation judgment result, identifying information of the extracted stereo cameras is stored in the memory 150-1, and then, one stereo camera is selected from the extracted stereo cameras. This is because when switching the stereo camera 40-1 for driving and parking assistance and the stereo cameras 40-2 and 40-3 for door opening/closing assistance, the case is not limited to a case where one is selected from two. A possibility that plural ones are installed for each of the stereo camera 40-1 for driving and parking assistance and the stereo cameras 40-2 and 40-3 for door opening/closing assistance is high. Since the number of doors may be 4, a possibility that 4 sets at most and at least 2 sets are set for each of the stereo cameras 40-2 and 40-3 for door opening/closing assistance. In order to carry out the selection easily, it is preferable to previously narrow down as much as possible the number of options from which the selection is to be made at once. For example, in a case where situation judgment is carried out every several frames at a time the vehicle speed is zero, a method of obtaining information from many sensors every time and selecting one stereo camera from plural ones is not used. Instead, stereo cameras which will be required are predicted from the running state and are previously extracted. Thus, it is possible to reduce the resources required for the processing and it is possible to carry out processing rapidly in a case where a determination of switching should be made at once. In a case where opening/closing of a door has been detected or it has been detected that a time of immediately before opening/closing of a door has come, a selection of an image(s) of the stereo cameras 40-2 and 40-3 for door opening/closing assistance is fixed.

In a case where the number of stereo cameras that have been extracted from the plural stereo cameras is not one when the situation judgment and image selection part 11 is to select a stereo camera(s) therefrom, one stereo camera may be further selected from the extracted plural stereo cameras using temperature information from the temperature sensor 27 and/or information from the microswitch 30 and/or the pyroelectric sensor 29.

<Situation Judgment>

Generally speaking, it is possible to assume that there is no situation in which the driver should open or close a door while a vehicle is running in a normal driving state. Thus, switching between driving or parking assistance and door opening/closing assistance is made depending on whether the vehicle is running in a normal driving state. However, if the determination is made only depending on whether the vehicle is running in a normal driving state, there is a possibility that appropriate switching cannot be made. For example, when the determination is made only from information of the vehicle speed, there is a possibility that an erroneous determination may be made such that, even in a situation in which driving assistance should be carried out, suddenly switching is made to use the stereo cameras for door opening/closing assistance, and carry out distance measurement, whereby monitoring in the forward facing direction cannot be made. That is, if a determination of carrying out door opening/closing assistance because the vehicle has stopped were made, switching would be made into door opening/closing assistance each time the vehicle has stopped because of stopping at a red light or temporarily stopping, and driving assistance could not be made during the time.

Further, if door opening/closing assistance were carried out only when the fact that the shift position is in "park" has been detected by the shift position sensor 23, door opening/closing assistance could not be carried out in a case where the passenger or the driver gets out the vehicle while the shift position is in "drive".

Further, if a door's opening/closing were detected only from information obtained from the microswitch 30 or the pyroelectric sensor 29, there would be a possibility that switching is made into door opening/closing assistance only when the passenger or the driver puts his or her hand on a door even while the vehicle is running in a normal driving state. An example of a method of situation judgment for avoiding such an erroneous determination will be described below.

First, a "brake frequency" will be described for the purpose of describing situation judgment.

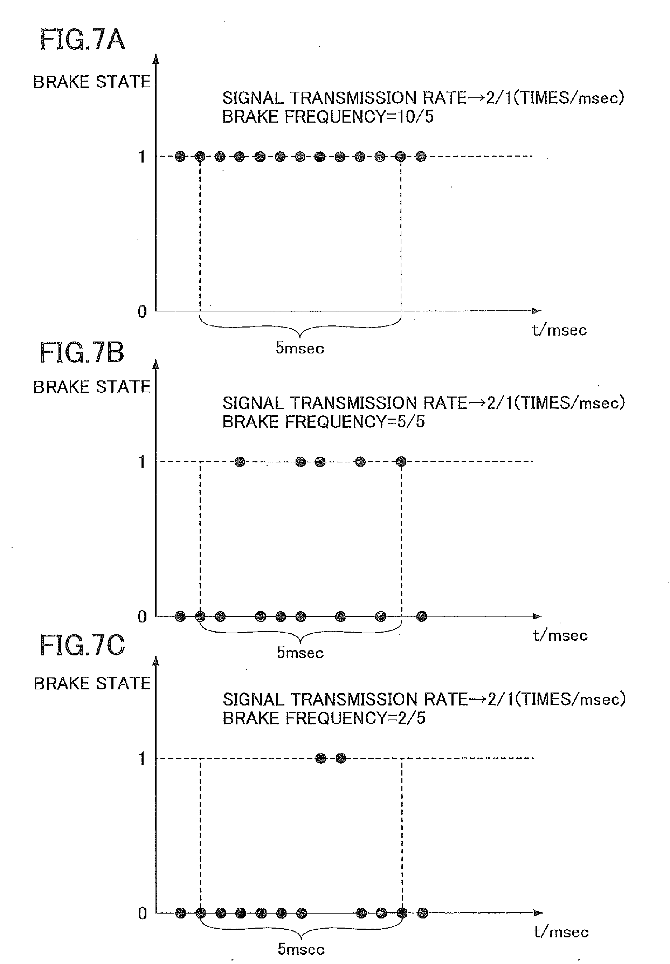

FIGs. 7A, 7B and 7C illustrate one example of processing the signal from the brake sensor 25 and a brake frequency. In FIGs. 7A, 7B and 7C, the black dots represent detection timings of the signal of the brake pedal. The black dots are plotted on "1" when it has been determined that the brake pedal has been pressed. The black dots are plotted on "0" when it has been determined that the brake pedal has not been pressed.

It is assumed that the signal from the brake sensor 25 is obtained twice every millisecond. The number of times the signal from the brake sensor 25 corresponds to "1" (i.e., the brake pedal has been pressed) is counted for a fixed period of time, for example, for 5 milliseconds. The thus obtained count value will be referred to as a brake frequency.

In FIG. 7A, all the black dots are of "1" during 5 milliseconds. In FIG. 7B, 5 black dots are of "1" during 5 milliseconds. In FIG. 7C, two black dots are of "1" during 5 milliseconds.

During a situation in which the driver is continuously pressing the brake pedal, the brake frequency should have a greater value, as shown in FIG. 7A (the number of "1": 10 times/5 msec = 2 times/1 millisecond).

Further, during a state of operating the vehicle for parking, the number of times of pressing the brake pedal per fixed period of time is greater than during a state of the vehicle's running in a normal driving state. Thus, the brake frequency has a greater value than during a state of the vehicle's running in a normal driving state. However, the brake frequency should have a smaller value than a state of continuously pressing the brake. Thus, as shown in FIG. 7B, the number of "1"s that is smaller than the 10 times/5 milliseconds and larger than 0 is obtained.

Further, although the brake may be pressed even while the vehicle is running in a normal driving state, there is a possibility that the brake frequency obtained when a target period of time is defined to a certain period of time has a by far smaller value in comparison to the state of operating the vehicle for parking. Thus, as shown in FIG. 7C, the number of "1"s greater than 0 is obtained during 5 milliseconds.

Thus, it is possible to carry out determination of the situation by previously determining, as a threshold, a value of the brake frequency for distinguishing between a situation of continuously pressing the brake pedal and a situation of pressing the brake pedal but not continuously pressing the brake pedal, for example, during operating the vehicle for parking, with reference to the numbers of "1"s in FIGs. 7A, 7B and 7C. The threshold for determining whether the brake pedal is being continuously pressed will be referred to as a threshold "a". The threshold for distinguishing a state of operating the vehicle for parking and a stopped state (after the parking) will be referred to as a threshold "b". The threshold "a" is, for example, on the order of 9 through 10. The threshold "b" is, for example, on the order of 1 through 2.


<Situation Judgment>

As mentioned above, generally speaking, it is possible to assume that there is no situation in which the driver should open or close a door while a vehicle is running in a normal driving state. Thus, switching between driving or parking assistance and door opening/closing assistance is made depending on whether the vehicle is running in a normal driving state. However, if the determination is made only depending on whether the vehicle is running in a normal driving state, there is a possibility that appropriate switching cannot be made. For example, when the determination is made only from information of the vehicle speed, there is a possibility that an erroneous determination may be made such that, even in a situation in which driving assistance should be carried out, suddenly switching is made to use the stereo cameras for door opening/closing assistance and carry out distance measurement, whereby monitoring in the forward facing direction cannot be made. That is, if a determination of carrying out door opening/closing assistance because the vehicle has stopped were made, switching would be made into door opening/closing assistance each time the vehicle has stopped because of stopping at a red light or temporarily stopping and driving assistance could not be made during the time.

Further, if door opening/closing assistance were carried out only when the fact that the shift position is in "park" has been detected by the shift position sensor 23, door opening/closing assistance could not be carried out in a case where the passenger or the driver gets out the vehicle while the shift position is in "drive".

Further, if a door's opening/closing were detected only from information obtained from the microswitch 30 or the pyroelectric sensor 29, there would be a possibility that switching is made into door opening/closing assistance only when the passenger or the driver puts his or her hand on a door even while the vehicle is running in a normal driving state. An example of a method of situation judgment for avoiding such an erroneous determination will be described now.

- Determination of Door Lock Unlocked (step S1)

First, information as to whether the door lock has been unlocked is obtained. The door lock is inevitably unlocked in a case where a door is to be opened and closed. Thus, when the door lock has not been unlocked (step S1 no), the situation judgment and image selection part 11 will carry out distance measurement using the stereo camera 40-1 for driving and parking assistance (in FIG. 6, "a").

When the situation judgment is to be carried out, it is preferable to determine by combining the signals obtained from the vehicle speed sensor 21, the steering rudder angle sensor 22, the shift position sensor 23, the direction indicator sensor 24, the brake sensor 25, the parking brake sensor 26 and the door lock sensor 28.

Further, when the determination is to be carried out, it is possible to carry out further precise situation judgment by using, together with the above-mentioned sensor information, a result of characteristic object recognition that may be carried out on an image(s) of the stereo camera(s) of several frames before. The images to be used for characteristic object recognition may be a parallax image(s) or a luminance image(s).

Further, it is possible to carry out further precise situation judgment by detecting an object from an image(s) of the stereo camera(s) of several frames before (where blocks at the same parallax are regarded as a single object), and using, together with the above-mentioned sensor information, a result of calculation of a movement amount of the object with respect to time, i.e., the speed of the object, instead of carrying out characteristic object recognition.

-- Determination of Driving Assistance in Case Other Than Case of Vehicle Speed of Zero

In a case other than a case where the vehicle speed is 0 (step S2 no), the situation judgment and image selection part 11 determines whether the brake frequency is less than or equal to the threshold "a" (step S3-1). In a case where the brake frequency is less than or equal to the threshold "a" (step S3-1 yes), it is determined that the driver does not have an intention to carry out parking and driving assistance will be carried out (FIG. 6, "c"). In a case where the brake frequency is greater than the threshold "a" (step S3-1 no), it is determined that the driver has an intention to carry out parking and parking assistance will be carried out (FIG. 6, "b").

Determination in Case of Vehicle Speed of Zero and After Completion of Parking

In a case where the door lock has been unlocked (step S1 yes), first the vehicle speed information is obtained (step S2). In a case where the vehicle speed is 0 (step S2 yes), information concerning whether the shift position obtained from the shift position sensor 23 is in "park" (step S3-2). In a case where the shift position is in "park" (step S3-2 yes), it is determined that parking has been completed and door opening/closing assistance will be carried out (FIG. 6, "d"). There is a case where the shift position is made to be "park" during a traffic jam or when stopping at a red light continues for a long time. However, the shift position is inevitably changed to "drive" when the vehicle is then to enter a normal driving state. Thus, there will be no problem when switching is made into the stereo cameras 40-2 and 40-3 for door opening/closing assistance in response to having detected that the shift position is in "park".

In order to carry out the determination further precisely, it is possible to determine that the vehicle is in a parked state from detecting a characteristic object from an image recognition result of the recognition part 14 or from a fact that there are many static objects around the vehicle. Further, it is also possible to make the determination using information not from the shift position sensor 23 but from the brake sensor 25. There is a high possibility that the vehicle is in a parked state when the brake pedal is not pressed although the vehicle speed is zero and the parking brake has been applied.

-- Determination in Case of Normal Driving State but Vehicle Speed of Zero Temporarily

The same as the case of determining that parking has been completed, the state of the door lock is determined (step S1) and the vehicle speed is determined (step S2). In a case of stopping at a red light or temporality stopping, the vehicle speed should be zero. In a case where the vehicle speed is zero (step S2 yes), it is determined from the shift position sensor 23 whether the shift position is at a position other than "park" (step S3-2). In a case where the shift position is in "park" (step S3-2 yes), it is possible to determined that parking has been completed. In a case where the shift position is at a position other than "park" (step S3-2 no), the information from the brake sensor 25 is obtained (step S4). At this time, instead of determining whether the brake pedal has been pressed at a certain time point, information is obtained as to how frequently a state of the brake pedal being pressed has occurred during a certain period of time.

(i) in a case where the brake frequency is greater than or equal to the threshold "b" (step S4 yes):

The situation judgment and image selection part 11 determines that the driver is in a state of continuously pressing the brake pedal in a case where the brake frequency is greater than or equal to the threshold "b".

Next, a characteristic object recognition result that has been processed by the recognition part 14 (described later) obtained from image data (the image data to be used for recognition may be any one of image data before the correlation calculation and image data after the correlation calculation) photographed by the stereo camera(s) for driving assistance is obtained (step S5-2). The characteristic object(s) may be, specifically, a traffic light, a stripe pattern of a pedestrian crossing, a temporary stop line, a stop sign, a railroad crossing and/or the like. In a case where a characteristic object has been recognized (step S5-2 yes), it is determined that the vehicle has stopped at a red light, is in a temporarily stopped state, has stopped at a railroad crossing or the like, and the stereo camera 40-1 for driving assistance and the stereo cameras 40-2 and 40-3 for door closing/opening assistance are selected.

At this time, it is not necessary to select all of the stereo cameras included in the stereo cameras 40-2 and 40-3 for door closing/opening assistance. The stereo camera(s) to be used may be narrowed down from among those included in the stereo cameras 40-2 and 40-3 for door closing/opening assistance to a stereo camera(s) at the position(s) of the passenger(s) and/or the driver who have(has) been detected by the occupant detection sensor 32 installed in the vehicle. However, the passenger(s) and/or the driver may move in the vehicle (in particular, among the rear seats). Thus, it is necessary to detect the passenger(s) and/or the driver every certain time interval.

In a case where the stereo camera 40-1 for driving assistance and the stereo cameras 40-2 and 40-3 for door closing/opening assistance have been thus selected, switching is made into door opening/closing assistance only when opening/closing of a door has been detected by the microswitch 30 or the pyroelectric sensor 29 and driving assistance is carried out in the other cases (FIG. 6, "g").

Further, also in a case where no characteristic object has been detected by image recognition (step S5-2 no), it is not immediately determined that the current state is other than a state of having stopped at a red light or the like. This is because there are limits of detecting, by image recognition, a traffic light, a railroad crossing, a pedestrian crossing and/or the like. In a case where no characteristic object has been detected, the situation judgment and image selection part 11 then determines from a recognition result(s) of the stereo camera(s) whether there is an object that is currently moving in a direction of crossing a direction in which the vehicle is moving (step S6).

Even when no characteristic object has been detected by image recognition, it is possible to detect an object from parallax images, and determine whether one object is currently moving. When it has been thus determined that an object is currently moving in a direction crossing the vehicle, a situation may be considered in which the vehicle has stopped because a pedestrian is actually crossing although there is no pedestrian crossing or the like. In a case where such a moving object has been detected (step S6 yes), it is determined that the vehicle has temporarily stopped during a normal driving state and also the stereo cameras 40-2 and 40-3 for door opening/closing assistance will be selected as candidate cameras. Then, driving assistance will be carried out when opening/closing of a door has not been detected by the microswitch 30 and/or the pyroelectric sensor 29 (FIG. 6, "i").

Further, in a case where even such a moving object has not been detected (step S6 no), it is determined that a possibility that the passenger(s) and/or the driver will exit the vehicle is high, and switching is made into the stereo cameras for the doors other than the door of the driver's seat from among the stereo cameras 40-2 and 40-3 for door opening/closing assistance (FIG. 6, "h"). The reason why the driver is thus excluded is that a possibility that the driver will open the door and exit the vehicle with the shift position other than in "park" while continuously pressing the brake pedal is very low.

(ii) in a case where the brake frequency is greater than the threshold "a" and smaller than the threshold "b" (step S4 no and step S5-1 no):

Further, in a case where the brake frequency is greater than the threshold "a" and smaller than the threshold "b", it is determined that the driver is operating the vehicle for parking and switching will be made into the stereo camera 40-1 for parking assistance (FIG. 6, "e"). In a case where the stereo camera 40-1 for parking assistance will also be used as at least one of the stereo cameras 40-2 and 40-3 for door opening/closing assistance, a process may be carried out for correcting distortion with high precision by the preprocessing part 12 also for a wide angle area, or the stereo camera 40-1 for parking assistance may be used as at least one of the stereo cameras 40-2 and 40-3 for door opening/closing assistance as it is.

(iii) in a case where the brake frequency is less than or equal to the threshold "a" (step S4 no and step S5-1 yes):

In a case where the brake frequency is smaller than or equal to the threshold "a", the vehicle is in a stopped state, and a possibility that a person(s) other than the driver exits the vehicle is high. Thus, door opening/closing assistance for the doors other than the driver's seat is carried out (FIG. 6, "f"). For example, in a case where the parking brake has been applied and the vehicle is in a stopped state although the brake pedal is not pressed, such this condition may be met.

-- Method of Situation Judgment When Using Same Stereo Camera Both for Door Opening/Closing Assistance and Parking Assistance (Vehicle Speed Other Than Zero)

Opening/closing of a door is carried out basically in a state of the vehicle not moving. Thus, in a state of the vehicle speed of zero, switching is made from the stereo camera for driving assistance into the stereo cameras for door opening/closing assistance as mentioned above.

However, in a case where at least one of the stereo cameras 40-2 and 40-3 for door opening/closing assistance is also used for as the stereo camera 40-1 for parking assistance, at least one of the stereo cameras 40-2 and 40-3 for door opening/closing assistance is used even in a case where the vehicle speed is not zero.

It is noted that the stereo cameras 40-2 and 40-3 for door opening/closing assistance are installed at side parts of the vehicle (as shown in FIG. 2), and the target distance measurement ranges thereof are a short distance. On the other hand, also the stereo camera 40-1 for parking assistance is installed for the purpose of avoiding collision with another vehicle or a person around the occupant vehicle. Thus, in many cases, the stereo camera 40-1 for parking assistance has the lens specifications the same or similar to those of the stereo cameras 40-2 and 40-3 for door opening/closing assistance.

Thus, it is possible to use at least one common stereo camera as both at least one of the stereo cameras 40-2 and 40-3 for door opening/closing assistance and the stereo camera 40-1 for parking assistance. Thus, it is possible to reduce the number of the stereo cameras 40-2 and 40-3, and to reduce the cost. In the following example, a case will be assumed where the plural stereo cameras 40-1 for driving assistance and parking assistance are installed at a front part, and the stereo cameras 40-2 and 40-3 for door opening/closing assistance are installed at side parts.

--During Parking (backward)

During a parking operation, it may be considered that the vehicle speed is lower than a normal driving state, and thus a threshold of the vehicle speed for distinguishing between a normal driving state and a parking operational state is previously stored in the memory 150-1 or the like. In a case where the vehicle speed is less than or equal to the threshold, the information from the shift position sensor 23 is obtained next. In a case where it is determined from the shift position sensor 23 that the shift position is in "reverse", switching is made into the stereo cameras for parking assistance.

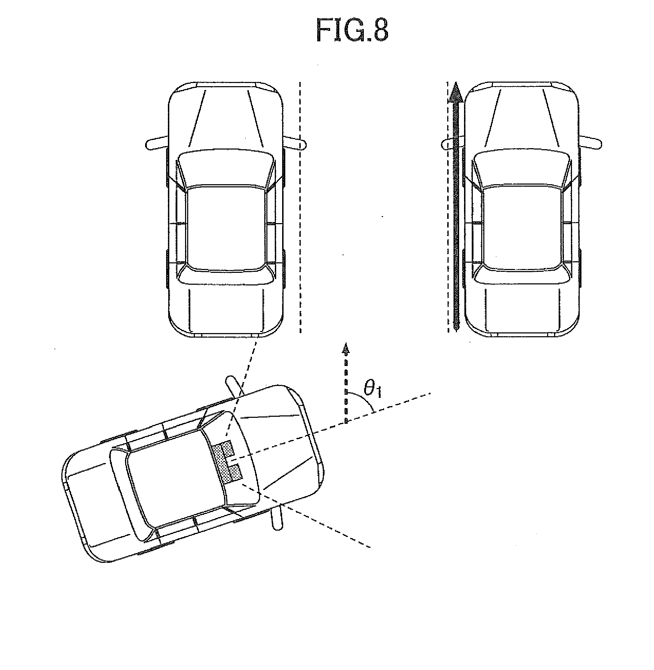

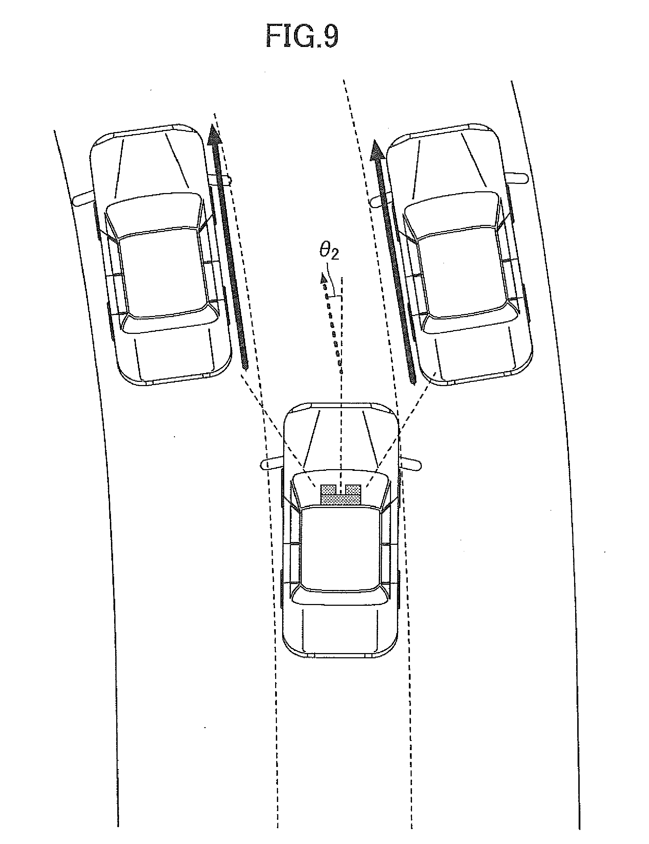

FIG. 8 schematically shows one example of the orientations of surrounding vehicles and a photographing direction of the stereo camera installed in the occupant vehicle when the occupant vehicle will be parked by moving forward. FIG. 9 schematically shows one example of the orientations of surrounding vehicles and a photographing direction of the stereo camera installed in the occupant vehicle during a traffic jam.

In a case of parking by moving the vehicle forward, more sets of information are required for the determination than a case of parking while the shift position is set in "reverse", because it is necessary to distinguish the case from a state of a traffic jam and a state of turning left or turning right. First, it is determined whether the shift position is in "drive", the vehicle speed is less than or equal to the threshold and the brake frequency has a value within a range of a parking operation. When using the above-mentioned thresholds "a" and "b", it is determined whether the brake frequency has a value greater than "a" and less than "b". Next, using the information from the direction indicator sensor 24, it is determined whether the vehicle will turn left or right. In a case where a turn signal (winker) is currently being used, the stereo camera 40-1 for driving assistance is selected as a result of having determined that the vehicle will turn right or left during a normal driving state. On the other hand, in a case where no turn signal (winker) is currently being used, there is a possibility that the vehicle is operated for parking or the vehicle has been involved in a traffic jam.

Further, in order to determine whether the vehicle is currently being operated for parking or has been involved in a traffic jam, it is possible to make the determination from a ratio of stationary objects using an image recognition result of the recognition part 14. In this case, it is preferable to carry out the recognition not from the luminance image(s) but from the parallax images.

Further, as the image(s) to be used for the recognition, it is preferable to use an image(s) obtained from photographing in the forward facing direction taken for the purpose of driving assistance. On the image(s), object recognition is carried out first. At this time, it is not necessary to recognize what is an object that appears in the image, i.e., a vehicle, a traffic light, a human being, a building or the like. Blocks having the same parallax value are recognized as an object, and it is determined whether the recognized object stands still. Specifically, a travel distance of the occupant vehicle is measured by the vehicle speed sensor 21, and it is determined whether the recognized object has approached the occupant vehicle by the travel distance based on calculation using the parallax images.

In a case where the recognized object has approached the occupant vehicle by the travel distance, it may be considered that the object stands still on the ground. In a case where the occupant vehicle does not stand still during a traffic jam, surrounding vehicles also have moved even slightly without standing still. On the other hand, at a time of parking, there is a characteristic of many surrounding objects standing still. Thus, an image recognition result is useful information for carrying out situation judgment between a state of parking and a state of having been involved in a traffic jam.

Further, instead of or in addition to using the distance by which the surrounding stationary object approaches the occupant vehicle with respect to the occupant travel distance, it is also possible to determine the orientation of the stationary object from the parallax images, for example, and from the determination result, determine whether the occupant vehicle will be parking.

An example will now be considered in which the stereo camera has been installed at a front part of the occupant vehicle and is pointed in the direction the same as the orientation of the occupant vehicle. FIG. 8 shows an example of carrying out parking. The angle formed between the orientation of the surrounding vehicles and the direction of the optical axis of the stereo camera installed in the occupant vehicle is referred to as $\theta_1$. FIG. 9 shows an example of having been involved in a traffic jam. The angle formed between the orientation of the surrounding vehicles and the direction of the optical axis of the stereo camera installed in the occupant vehicle is referred to as $\theta_2$.

The orientation of the surrounding vehicles can be obtained from a steering rudder angle or a yaw rate sensor or can be determined from the parallax images. During a traffic jam, as shown in FIG. 9, the orientation of the vehicle in front of the occupant vehicle is approximately the same as the orientation of the occupant vehicle, except for a case where the road makes a sharp curve. Thus, $\theta_2$ has a small value. However, during carrying out parking, as shown in FIG. 8, a possibility that the occupant vehicle and the vehicle in front of the occupant vehicle have a remarkably large difference in orientation therebetween is high. Thus, it may be considered that $\theta_1$ has a large value. It may be also considered to carry out situation judgment by previously providing a threshold of the relative angle between the front object (vehicle) and the occupant vehicle.

The situation judgment and image selection part 11 determines whether to carry out driving assistance or parking assistance based on $\theta$ (i.e., $\theta_1$ or $\theta_2$), and carries out the above-described assistance contents.

<Situation Judgment of FIG. 6>

In accordance with the above-mentioned contents, situations are determined in FIG. 6 as follows.

(1) the door lock of the driver's seat has not been unlocked (step S1 no):

"a": Since the door lock of the driver's seat has not been unlocked, it is expected that the driver will continue driving including parking. Thus, the situation judgment and image selection part 11 determines to carry out "driving or parking assistance".

(2) the door lock has been unlocked, the vehicle speed is not zero, and the frequency of pressing the brake is greater than the threshold "a" (step S3-1 no):

"b": Since the frequency of pressing the brake is greater than the threshold "a", it is expected that the vehicle is currently carrying out parking or immediately before carrying out parking. Thus, it may be considered that the reason why the door lock has been unlocked is that the driver has forgotten to lock the door.

(3) the door lock has been unlocked, the vehicle speed is not zero, and the frequency of pressing the brake is less than or equal to the threshold "a" (step S3-1 yes):

"c": Since the brake pedal has been scarcely pressed, it is expected that the driver is driving the vehicle in a normal driving state. It may be considered that the reason why the door lock has been unlocked is that the driver has forgotten to

lock the door.

(4) the door lock has been unlocked, the vehicle speed is zero, and the shift position is in "park" (step S3-2 yes):

"d": Since the shift position is in "park", it is expected that the driver will exit the vehicle.

(5) the door lock has been unlocked, the vehicle speed is zero, the shift position is not "park", the frequency of pressing the brake is less than the threshold "b" (> "a") and the frequency of pressing the brake is greater than the threshold "a" (step S5-1 no):

"e": Since the brake pedal has been pressed at a frequency between "a" and "b", it is expected that the driver is currently operating the vehicle for parking.

(6) the door lock has been unlocked, the vehicle speed is zero, the shift position is not "park", the frequency of pressing the brake is less than the threshold "b" (> "a") and the frequency of pressing the brake is less than or equal to the threshold "a" (step S5-1 yes):

> "f": Since the brake pedal has been scarcely pressed, it may be considered that the parking brake has been applied and the vehicle has been stopped. Thus, it is expected that the driver has finished driving, and the passenger(s) and/or the driver will exit the vehicle.

(7) the door lock has been unlocked, the vehicle speed is zero, the shift position is not "park", the frequency of pressing the brake is greater than or equal to the threshold "b" (> "a") and a characteristic object has been detected by image recognition (step S5-2 yes):

> "g": It may be considered that the vehicle has been stopped at a red light or before a pedestrian crossing, and thus driving assistance will be carried out with sensing of opening/closing of a door using the microswitch 30 and the pyroelectric sensor 29.

(8) the door lock has been unlocked, the vehicle speed is zero, the shift position is not "park", the frequency of pressing the brake is greater than or equal to the threshold "b" (> "a"), no characteristic object has been detected by image recognition and crossing of a moving object has not been detected (step S6 no):

> "h": Since none of a traffic light and a pedestrian crossing has been detected and crossing of a pedestrian has not been detected, it is expected that the passenger(s) and/or the driver will exit the vehicle (door opening/ closing assistance).

(9) the door lock has been unlocked, the vehicle speed is zero, the shift position is not "park", the frequency of pressing the brake is greater than or equal to the threshold "b" (> "a"), no characteristic object has been detected by image recognition and crossing of a moving object has been detected (step S6 yes):

> "i": It may be considered that the driver is waiting for a pedestrian to pass through. Thus, driving assistance is carried out with sensing opening/closing of a door using the microswitch 30 and the pyroelectric sensor 29.

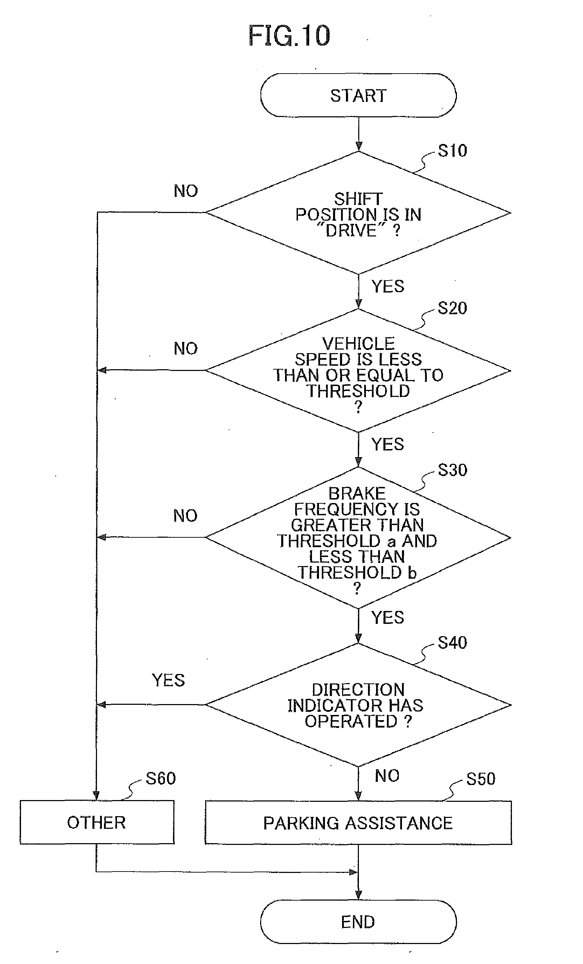

FIG. 10 shows one example of a procedure of determining whether the vehicle will move forward and carry out parking or is in a normal driving state.

The situation judgment and image selection part 11 determines whether the shift position is in the "drive" position (step S10). In a case in the "drive" position, there is a possibility that the vehicle moves forward and carries out parking.

In a case of where the shift positions is the "drive" position (step S10 yes), the situation judgment and image selection part 11 then determines whether the vehicle speed is less than or equal to the threshold (step S20). The threshold is, for example, on the order of 10 through 20 [km/h]. In a case where the vehicle speed is less than or equal to the threshold, there is a possibility that the vehicle will carry out parking.

In a case where the vehicle speed is less than or equal to the threshold (step S20 yes), the situation judgment and image selection part 11 then determines whether the brake frequency is greater than "a" and less than "b" (step S30). In a case where the brake frequency is greater than "a" and less than "b", there is a possibility that the driver is adjusting the vehicle speed to slow down.

In a case where the brake frequency is greater than "a" and less than "b" (step S30 yes), the situation judgment and image selection part 11 then determines whether the direction indicator sensor 24 has detected operation of the direction indicator (step S40). In a case where the direction indicator sensor 24 has detected operation of the direction indicator, there is a possibility that the vehicle is preparing to turn right or left at an intersection or the like.

In a case where the direction indicator sensor 24 has not detected operation of the direction indicator (step S40 no), the situation judgment and image selection part 11 then determines that the vehicle will move forward and carry out parking, and will select the stereo camera(s) for parking assistance (step S50).

In a case where the determination result of step S10 is no, the determination result of step S20 is no, the determination result of step S30 is no or the determination result of step S40 is yes, the situation judgment and image selection part 11 then determines to carry out other assistance (step S60). The other assistance is driving assistance or door opening/closing assistance, and depending on the conditions, no such assistance may be carried out.

[Preprocessing Part]

Next, the preprocessing part 12 will be described. The preprocessing part 12 processes an image(s) of the stereo camera(s) selected by the situation judgment and image selection part 11 so that the image(s) can be used for calculation by the common correlation calculation part 13.

- Distortion Correction

Distortion Correction that is required for carrying out distance measurement with a high precision will be described. Distortion directly influences on parallax, and thus the distance measurement result might be very low in precision if correlation calculation were carried out using a photographed image(s) with the distortion kept uncorrected. In the system using the plural stereo cameras, the target measurement distances and field angles of the respective cameras are different, and thus there is a possibility that different lenses are used. Lenses inevitably have distortion, and lenses having different focal lengths and/or field angles (i.e., lenses of different design values) have difference in a manner of being distorted. Further, even the distortion values of lenses that have the same design value mat vary due to manufacturing errors or the like. Thus, distortion correction parameters of the respective monocular cameras are previously stored in the memory 150-2.

As a specific method of correcting the distortion, a LUT that has information for converting the pixel values before the correction into those after the correction for all the pixels may be used, or the distortion may be expressed by a polynomial. A large storage volume is required for such a LUT, and thus it may be preferable to express the distortion by a polynomial. Especially, according to the embodiment, the plural stereo cameras are used. Thus, an enormous storage volume may be required if the LUT data of all of the monocular cameras is stored.

As the distortion correction formula, the quartic polynomial shown in the following formula (1) may be considered. This distortion correction formula (1) expresses both distortion that exists in a design stage and distortion that is different for each camera due to manufacturing errors or the like even with the same design values. In the formula (1), $\delta x$ and $\delta y$ denote distortion amounts of a certain lens in an x direction and a y direction. x and y denote ideal image forming position coordinates. f1, f2, ..., fk and g1, g2, ..., gk denote distortion coefficients for a certain temperature. It is preferable that in order to obtain these distortion coefficients, the values of x, y, $\delta x$ and $\delta y$, are measured, and optimization of the distortion coefficients is carried out for satisfying the distortion formula (1) through the entirety of an image.

$$\delta_x = f_1 x^4 + f_2 x^3 y + f_3 x^2 y^2 + f_4 x^3 y + f_5 y^4 + \cdot \cdot \cdot$$

$$\delta_y = g_1 x^4 + g_2 x^3 y + g_3 x^2 y^2 + g_4 x^3 y + g_5 y^4 + \cdot \cdot \cdot \quad (1)$$

- Distortion Correction Depending on Temperature

The above-described distortion further varies for each monocular camera depending on the temperature. In a case of the use of the cameras in conditions of being installed in a vehicle, it is expected that the temperature of the inside of the vehicle may become near 80°C. Thus, the distortion amount variation due to the temperature may be large, and thus, distortion correction concerning the distortion due to the temperature is required for obtaining the distance measurement result with a high precision before the correlation calculation. According to the embodiment, it is also possible to deal with a change in the temperature based on the information from the temperature sensor 27.

After the situation judgment and image selection part 11 confirms from the temperature information detected by the temperature sensor 27 that the stereo cameras satisfy the correction possible temperature range, the preprocessing part 11 also obtains the information of the temperature sensor 27. In the memory 150-2, the distortion correction parameters are previously stored for the respective monocular cameras corresponding to variations in the temperature. As the distortion correction parameters, the LUT, the polynomial or the like may be considered. However, it can be considered that the above-mentioned polynomial (see the formula (1)) is preferable.

As an example of the polynomial, the following formula (2) may be considered, for example. The formula (2) is the same as the above-mentioned formula (1), but the distortion coefficients f and g (i.e., f1, f2, ..., fk and g1, g2, ..., gk) are expressed as functions of the temperature "t". The required storage volume can be reduced as a result of, instead of storing the distortion coefficients for the respective monocular cameras at each temperature, thus further expressing the distortion coefficients by the functions of the temperature.

$$\delta_x = f_1(t)x^4 + f_2(t)x^3y + f_3(t)x^2y^2 + f_4(t)x^3y + f_5(t)y^4 + \cdots$$

$$\delta_y = g_1(t)x^4 + g_2(t)x^3y + g_3(t)x^2y^2 + g_4(t)x^3y + g_5(t)y^4 + \cdots \quad (2)$$

[Correlation Calculation Part]

The correlation calculation part 13 carries out common processing on a pair of sets of image data that have been output from the preprocessing part 12. At this time, information indicating one of the stereo cameras 40-1, 40-2 and 40-3 which has photographed the pair of sets of images that have been input from the preprocessing part 12 is input together with the image data. The correlation calculation part 13 carries out stereo matching according to the base-line length, the number of pixels and the search range of the stereo camera that has obtained the image data and so forth and carries out correlation calculation. It is preferable that a memory 150-3 (see FIG. 4) previously stores the information of the base-line lengths, the numbers of pixels and the search ranges of the respective stereo cameras. By the correlation calculation, the parallax p is calculated.

As the matching process, for example, a Sum of Absolute Difference (SAD) method is known. According to the SAD method, parts in which the same photographing target is photographed are extracted from a pair of sets of stereo image data photographed by any one of the stereo cameras 40-1, 40-2 and 40-3. Then, the same points of the photographing target are associated between the pair of sets of stereo image data and shift amounts (parallax) between the associated points are obtained. For this purpose, one of the two images is fixed and a pixel block of 3 by 3 or the like, for example, is taken out with a center that is a target pixel from the other image. The pixel block is then shifted pixel by pixel with respect to the pixels of the first image and thus the most coincident position will be obtained. Then, the most coincident position will be obtained by the following procedure. The integrated value of the absolute values of the differences in the luminance values at the pixel block between the two images is obtained as an evaluation value. Then, the position of the pixel block at which the evaluation value is minimized is obtained as the most coincident position.

Then, the number of pixels by which the pixel block has been thus shifted up to the most coincident position is referred to as "n" and the pixel pitch is referred to as "s". Then, the parallax "p" is obtained by the following formula:

$$p = n \cdot s$$

[Recognition Part]

The recognition part 14 carries out object recognition using parallax and a formula by which it is possible to calculate the distance to a target including an offset.

- Collision Avoidance

From the distance information, it is possible to know distances at which surrounding objects are distributed. In a case where the images of the stereo camera 40-1 for driving assistance have been selected, the vehicle is currently moving in many cases. Thus, a determination is made to avoid collisions with the surrounding objects in consideration of the information of the vehicle speed sensor 21, the steering rudder angle sensor 22, the shift position sensor 23 and so forth together. Since the stereo camera 40-1 is installed in the occupant vehicle, control may be made to avoid a collision when the distance of a surrounding object from the occupant vehicle has become short without regard to whether the surrounding object stands still or is currently moving with respect to the ground.

-- Characteristic Object Recognition

When characteristic object recognition is to be carried out, it is preferable that characteristics of targets are previously stored in a memory 150-4 (see FIG. 4) as dictionary data. As characteristic objects, a traffic light, a stripe pattern of a pedestrian crossing, a temporary stop line, a stop sign, a railroad crossing, a human being, a shape of another vehicle viewed from the back side and/or the like may be cited.

When object recognition can be thus carried out, the driver can recognize an object the distance of which has become short and can become careful thereabout. In a case where a characteristic object has been recognized, this information may be input to the situation judgment and image selection part 11, and thereby, it is possible to carry out the situation judgment more precisely. Further, it is also possible to recognize blocks that have the same parallax as one block and determine whether an object occurs without determining what it is. In a case of thus recognizing blocks that have the same parallax as one block without determining what it is, dictionary data is advantageously not required. Thus, in this configuration, it may be considered that the better the distance measurement precision becomes, the more precisely the recognition can be carried out.

-- Calculation of Speed of Recognized Object

Further, the result of the recognition may be stored in the memory 150-4, the recognized object may be tracked every several frames, and the speed and the orientation of the object may be determined. In a case of thus tracking the recognized object, it is possible to determine the absolute speed of the object, i.e., whether the object is moving at the speed higher or lower with respect to the ground using the speed information of the occupant vehicle. Also, it is possible to obtain information of the recognized object. When the shape, the speed and the moving direction of the recognized object have been thus understood, this information is useful information for the situation judgment. For example, at a time of door opening/closing assistance, an object that is approaching the vehicle can be recognized and a timing at which opening/closing a door is possible can be determined using the speed of the recognized object and/or the like and can be informed the passenger(s) and/or the driver. Further, in this case, the opening/closing of the door can be controlled based on the recognition result. Further, for example, it is possible to select an image(s) of the stereo camera which is currently photographing an object that has such a moving speed that it is approaching the occupant vehicle earliest.

- Correction of Direction at Time of Parking

In a case where the stereo camera 40-1 for parking assistance is also used as at least one of the stereo cameras 40-2 and 40-3 for door opening/closing assistance, a photographed image(s) is(are) of a wall, a side surface of a stopped vehicle and/or the like in many cases. By using it(them), it is possible to carry out parking assistance. What can be obtained from the parallax images is not only a distance to a door or a target (i.e., a wall or a side surface of another vehicle) but also an inclination of the surface, the orientation of the surface and/or the like. The direction of installation of the stereo camera with respect to the occupant vehicle may be previously stored in the memory 150-1. Then, it may be determined whether the occupant vehicle is parallel to or turned from the surrounding wall or the side surface of another vehicle. Further, it may be calculated how much the occupant vehicle has been turned if it has been turned from the surrounding wall or the side surface of the other vehicle. Then warning may be made to the driver and/or the angle at which the occupant vehicle has been turned may be informed the driver. It is also possible that the warning is made and/or the turned angle is informed only when the angle is greater than or equal to a predetermined value. Thus, the driver can again operate the vehicle to carry out parking so as to control the occupant vehicle to be straight with respect to the surrounding wall or the other vehicle.

When the other vehicle has been also turned from the parking position, the occupant vehicle will also be turned and parked in the same way. Thus, it is also possible that before parking, it is previously determined whether the surrounding vehicle has been turned from a white line or the like using the stereo camera for driving assistance.

Further, although the contents are duplicate with those of door opening/closing assistance, the driver may be informed that the vehicle is nearer to one side than the other side in a case where one of the distances to the surrounding walls or the other vehicles on the right side and the left side is greater than or equal to a predetermined value viewed from the driver's seat. In this case, a preferable distance to a surrounding wall and/or another vehicle may be previously set. Then, when the distance is less than or equal to the set distance, the driver is informed of this matter together with information indicating whether the corresponding side is the left side or the right side. Then the driver can again carry out parking so that the distance required for, for example, a child to ride into or exit the vehicle can be provided on a lateral side.

- Calculation of Door Opening/Closing Allowable Range

In a case where the situation judgment and image selection part 11 has selected the stereo cameras 40-2 and 40-3 for door opening/closing assistance, it is possible to calculate an allowable value of a door opening from the distance measurement result calculated from the parallax images and the movable range of the door of the vehicle, the thickness of the door and the width of a human being stored in the memory 150-4. That is, it is determined whether the door can be opened completely, the door can be opened to such a distance that a human being can just pass through without margin, a human being cannot pass through even when the door is opened or the like.

For example, it is possible to determine how much the door can be opened as mentioned above by classifying the salutation using the following three conditions. Based on the determination result, not only the driver or the passenger(s) may be called attention but also control may be made to open/close the door actually.

(i) (the distance to the lateral directional target) - (the door's movable range) > 0:

It is determined that the door can be completely opened.

(ii) (the distance to the lateral directional target) - (the door's movable range) < 0, but, (the distance to the lateral directional target) - ((the door's thickness) + (the human being's minimum thickness or recognized thickness)) > 0:

It is determined that the door can be opened to such a distance that a human being can just pass through without margin (an attention is required).

(iii) (the distance to the lateral directional target) - (the door's movable range) < 0, and also, (the distance to the lateral directional target) - ((the door's thickness) + (the human being's minimum thickness or recognized thickness)) < 0:

It is determined that the door can be opened to such a distance that a white line can be watched or the like for parking but a human being cannot ride into or exit the vehicle.

- Calculation of Change Amount of External Parameters

External parameters that indicate relative distances between the cameras, the orientations of the cameras and so forth are previously determined. However, although the external parameters are adjusted with high precision at a time of shipment of the vehicle, the external parameters may be shifted due to aging or the like. When the external parameters have been thus changed, the parallax calculation precision may be degraded accordingly. Thus, after the stereo camera(s) is(are) selected by the situation judgment and image selection part 11, at a time of the correlation calculation, the amounts by which the external parameters have been thus changed may be preferably reflected in the correlation calculation. The amounts by which the external parameters have been thus changed are calculated by an external parameter change amount calculation part 31 (see FIG. 4).

[Display and Warning Control Part]

The above-mentioned recognition results are displayed on the display device 41, and are informed the driver by sound. Further, not only a display and/or sound, but also control of the brake, control of the door's movable range, control of the door lock and/or the like are effective.

For the above-mentioned collision avoidance, the display and warning control part 15 can warn the driver in various methods such as displaying on the display device 41 how many seconds will be taken before the occupant vehicle will collide with a target, sounding an alarm, displaying a vehicle which is approaching the occupant vehicle in a manner of blinking with a red color and/or the like.

Further, it is also effective to allow the driver to see which camera(s) is(are) currently carrying out distance measurement or which camera(s) is(are) not currently carrying out the distance measurement. For example, the state of the distance measurement being carried out by the stereo camera 40-1 may be previously determined as a basic state. Then, a lamp may be lit, sound may be generated and/or a display may be made on the display device 41 when the stereo cameras 40-2 and 40-3 for door opening/closing assistance are selected for carrying out the distance measurement.

As described above, the stereo camera system 100 according to the embodiment can precisely determine a situation that requires driving or parking assistance and a situation that requires door opening/closing assistance, and carry out the corresponding assistance. Further, the camera(s) is(are) completely switched, and thus, the driver and/or the passenger(s) can know which camera(s) is(are) currently used for monitoring the surroundings. Conversely, it is possible to instantaneously determine which direction the driver and/or the passenger(s) should pay attention. Further, concerning door opening/closing assistance, it is possible to understand before actually opening a door whether the door can be opened completely, it is necessary pay attention while opening the door since there is only such a space that a human being can just pass through without margin or there is only a space such that a human being cannot exit therethrough. Further, it is also possible that instead of warning the driver and/or passenger(s), the recognition result(s) can be used to control the door so that the door can be opened only to such a range that the door can be prevented from hitting a surrounding object even without the need for the passenger(s) and/or the driver to pay attention. Further, when a door will be opened, the stereo camera system 100 can recognize the distance and the speed of a surrounding object to determine whether there is an object that is approaching from the periphery and inform the passenger(s) and/or the driver of a timing at which the door will be opened/closed.

Thus, it is possible to provide the image processing apparatus (the stereo camera system 100) that uses the stereo cameras, the cost of which apparatus can be reduced.

An image processing apparatus and a vehicle have been described by the embodiment. However, the present invention is not limited to the specifically disclosed embodiment, and variations and modifications may be made without departing from the scope of the present invention.

The present application is based on Japanese Priority Application No. 2011-221995 filed October 6, 2011 and Japanese Priority Application No. 2012-155413 filed July 11, 2012, the entire contents of which are hereby incorporated herein by reference.

**Claims**

1. An image processing apparatus that includes plural stereo cameras and detects a distance to a target around a vehicle, the image processing apparatus comprising:

   sensors installed in the vehicle;
   a situation judgment and image selection part that determines a vehicle situation by combining detection signals of the sensors and switches based on the vehicle situation image data to be processed from image data photographed by a stereo camera for driving assistance to image data photographed by a stereo camera for door opening/closing assistance;
   a preprocessing part that carries out distortion corrections that are unique to the plural stereo cameras respectively on the image data selected by the situation judgment and image selection part so that a correlation calculation part can carry out correlation calculation that is common to the plural stereo cameras;
   the correlation calculation part that carries out correlation calculation on two sets of image data photographed by the single stereo camera; and
   a distance detection part that detects the distance to the target by using a calculation result of the correlation calculation part.

2. The image processing apparatus as claimed in claim 1, wherein
   the plural stereo cameras further include a stereo camera for parking assistance, and
   the situation judgment and image selection part switches based on the vehicle situation from the stereo camera for driving assistance into the stereo camera for parking assistance and selects the image data.

3. The image processing apparatus as claimed in claim 1 or 2, wherein
   the situation judgment and image selection part carries out matching between the image data photographed by any one of the plural stereo cameras and previously stored sets of image data of standard templates of characteristic objects and determines the vehicle situation based on the characteristic object identified by the matching.

4. The image processing apparatus as claimed in any one of claims 1, 2 and 3, wherein
   a brake sensor that is one of the sensors outputs, every cycle period of time, information that indicates whether a brake pedal has been pressed, and
   the situation judgment and image selection part compares frequency information of the bake pedal being pressed per unit period of time with a threshold and determines the vehicle situation.

5. The image processing apparatus as claimed in any one of claims 1, 2, 3 and 4, wherein
   the situation judgment and image selection part stores two or more candidates of the stereo cameras in a memory before fixing the vehicle situation, and, when having detected a door's opening/closing, fixes the vehicle situation, and also selects the image data of a single one of the stereo cameras.

6. The image processing apparatus as claimed in any one of claims 1, 2, 3, 4 and 5, further comprising
   a warning part that, in a case where the situation judgment and image selection part has selected the image data of the stereo camera which is capable of detecting a distance of a lateral direction of the vehicle as the stereo camera for door opening/closing assistance , warns an occupant according to the distance detected by the distance detection part.

7. The image processing apparatus as claimed in any one of claims 1, 2, 3, 4 and 5, wherein

a warning part that, in a case where the situation judgment and image selection part has selected the image data of the stereo camera which is capable of detecting a distance of a lateral direction of the vehicle as the stereo camera for door opening/closing assistance, calculates an angle between the vehicle and the target based on distances to the target at plural measurement points, and warns an occupant in a case where the angle is greater than or equal to a predetermined value.

8. The image processing apparatus as claimed in claim 6, further comprising
a storage part that stores a door's movable range, wherein
the warning part warns an occupant when the distance to the target in the lateral direction of the vehicle is less than the door's movable range.

9. The image processing apparatus as claimed in claim 8, wherein
the storage part further stores a minimum door opening amount required for an occupant to exit the vehicle, and the warning part warns an occupant when the distance to the target in the lateral direction of the vehicle is less than the minimum door opening amount required for an occupant to exit the vehicle.

10. The image processing apparatus as claimed in any one of claims 1, 2, 3, 4, 5, 6, 7, 8 and 9, further comprising
a seating position detection sensor that detects a position of an occupant who is seated, wherein
the situation judgment and image selection part selects as the image data of the stereo camera for door opening/ closing assistance the image data of the stereo camera which is capable of detecting a distance to the target that is in a lateral direction of a door through which the occupant who is seated in the position exits the vehicle.

11. The image processing apparatus as claimed in any one of claims 1, 2, 3, 4, 5, 6, 7, 8, 9 and 10, wherein
the situation judgment and image selection part estimates a moving speed of the target with respect to the ground based on a temporal change in the distance to the target detected by the distance detection part and a speed of the occupant vehicle, and
selects the image data of a single one of the stereo cameras as the door opening/closing assistance camera.

12. The image processing apparatus as claimed in any one of claims 1, 2, 3, 4, 5, 6, 7, 8, 9, 10 and 11, further comprising
a warning part that carries out one or more of displaying a colliding time, alarming and braking according to a relative speed of the target obtained from a temporal change in the distance to the target detected by the distance detection part.

13. A vehicle in which the image processing apparatus as claimed in any one of claims 1, 2, 3, 4, 5, 6, 7, 8, 9, 10, 11 and 12 is mounted.

# FIG.1

STEREO CAMERA 〜40-1

STEREO CAMERA 〜40-2

STEREO CAMERA 〜40-3

VARIOUS SENSORS 〜44

11

SITUATION JUDGMENT AND IMAGE SELECTION PART

DETERMINE WHICH ASSISTANCE IS TO BE CARRIED OUT
1. DRIVING ASSISTANCE
2. PARKING ASSISTANCE
3. DOOR OPENING/CLOSING ASSISTANCE

SELECT IMAGE ACCORDING TO ASSISTANCE TO BE CARRIED OUT

SELECTED IMAGE

IMAGE PROCESSING PART 〜120

EP 2 579 231 A1

# FIG.2

FIG.3

100

CAMERA CONTROL ECU

41 DISPLAY DEVICE

42 CAMERA CONTROL ECU

42-1 DISPLAY DEVICE I/F
42-2 RAM
20 IMAGE PROCESSING IC
42-6 I/O
42-7 I/O
42-8 I/O

42-3 CANC
42-4 ROM
42-5 CPU

40-1 STEREO CAMERA  1L  1R
40-2 STEREO CAMERA  2L  2R
40-3 STEREO CAMERA  3L  3R

CAN

44 SENSORS
43 ECU

EP 2 579 231 A1

100

21 — VEHICLE SPEED SENSOR

22 — STEERING RUDDER ANGLE DETECTION SENSOR

23 — SHIFT POSITION SENSOR

24 — DIRECTION INDICATOR SENSOR

25 — BRAKE SENSOR

26 — PARKING BRAKE SENSOR

27 — TEMPERATURE SENSOR

11 — SITUATION JUDGMENT AND IMAGE SELECTION PART

DOOR LOCK SENSOR — 28

PYROELECTRIC SENSOR — 29

MICROSWITCH — 30

MEMORY — 150-1

OCCUPANT DETECTION SENSOR — 32

1L / 1R } 40-1

2L / 2R } 40-2

3L / 3R } 40-3

150-2 — MEMORY

PREPROCESSING PART — 12

150-3 — MEMORY

CORRELATION CALCULATION PART — 13

31 — EXTERNAL PARAMETER CHANGE AMOUNT CALCULATION PART

RECOGNITION PART — 14

150-4 — MEMORY

DISPLAY AND WARNING CONTROL PART — 15

FIG.4

# FIG.5

FIG.6

FIG.6

```
                          ┌─ S1
              ┌──────────────────────────────┐
              │   DOOR LOCK HAS BEEN          │
              │     UNLOCKED ?                │
              └──────────────────────────────┘
         NO                          YES
    a                                        ┌─ S2
  ┌────────────────────┐         ┌──────────────────────────┐
  │ DRIVING OR PARKING │         │ VEHICLE SPEED IS ZERO    │
  │     ASSISTANCE     │         │          ?               │
  └────────────────────┘         └──────────────────────────┘
                              NO                        YES
                         ┌─ S3-1                          ┌─ S3-2
              ┌──────────────────────────┐    ┌──────────────────────┐
              │ FREQUENCY OF PRESSING    │    │ SHIFT POSITION IS    │
              │ BRAKE IS LESS THAN OR    │    │    IN PARK ?         │
              │ EQUAL TO THRESHOLD a ?   │    └──────────────────────┘
              └──────────────────────────┘
            NO            YES          NO                       YES
   b                 c                   ┌─ S4                    d
 ┌──────────┐   ┌──────────┐  ┌──────────────────────────┐  ┌────────────────┐
 │ PARKING  │   │ DRIVING  │  │ FREQUENCY OF PRESSING    │  │     DOOR       │
 │ASSISTANCE│   │ASSISTANCE│  │ BRAKE IS GRATER THAN OR  │  │OPENING/CLOSING │
 └──────────┘   └──────────┘  │ EQUAL TO THRESHOLD b ?   │  │  ASSISTANCE    │
                              └──────────────────────────┘  └────────────────┘
                               NO                    YES
                          ┌─ S5-1                      ┌─ S5-2
              ┌──────────────────────────┐    ┌──────────────────────────┐
              │ FREQUENCY OF PRESSING    │    │ CHARACTERISTIC OBJECT    │
              │ BRAKE IS LESS THAN OR    │    │ HAS BEEN DETECTED FROM   │
              │ EQUAL TO THRESHOLD a ?   │    │ IMAGE RECOGNITION ?      │
              └──────────────────────────┘    └──────────────────────────┘
            NO              YES            NO                         YES
   e                f                        ┌─ S6              g
```

DRIVING OR PARKING ASSISTANCE

VEHICLE SPEED IS ZERO ?

FREQUENCY OF PRESSING BRAKE IS LESS THAN OR EQUAL TO THRESHOLD a ?

SHIFT POSITION IS IN PARK ?

PARKING ASSISTANCE

DRIVING ASSISTANCE

FREQUENCY OF PRESSING BRAKE IS GRATER THAN OR EQUAL TO THRESHOLD b ?

DOOR OPENING/CLOSING ASSISTANCE

FREQUENCY OF PRESSING BRAKE IS LESS THAN OR EQUAL TO THRESHOLD a ?

CHARACTERISTIC OBJECT HAS BEEN DETECTED FROM IMAGE RECOGNITION ?

e PARKING ASSISTANCE

f DOOR OPENING/CLOSING ASSISTANCE OTHER THAN DRIVER'S SEAT

MOVING OBJECT'S CROSSING HAS BEEN DETECTED ?

g DRIVING ASSISTANCE AND SENSING DOOR OPENING/CLOSING USING MICROSWITCH AND PYROELECTRIC SENSOR

h DOOR OPENING/CLOSING ASSISTANCE OTHER THAN DRIVER'S SEAT

i DRIVING ASSISTANCE AND SENSING DOOR OPENING/CLOSING USING MICROSWITCH AND PYROELECTRIC SENSOR

EP 2 579 231 A1

## FIG.7A

BRAKE STATE

SIGNAL TRANSMISSION RATE→2/1(TIMES/msec)
BRAKE FREQUENCY=10/5

1

0

t/msec

5msec

## FIG.7B

BRAKE STATE

SIGNAL TRANSMISSION RATE→2/1(TIMES/msec)
BRAKE FREQUENCY=5/5

1

0

t/msec

5msec

## FIG.7C

BRAKE STATE

SIGNAL TRANSMISSION RATE→2/1(TIMES/msec)
BRAKE FREQUENCY=2/5

1

0

t/msec

5msec

# FIG.8

# FIG.9

# FIG.10

```
                    ┌─────────────┐
                    │    START    │
                    └─────────────┘
                           │
                           ▼         S10
              ╱─────────────────────────╲
    NO       ╱         SHIFT             ╲
◄────────────      POSITION IS IN         
             ╲        "DRIVE" ?          ╱
              ╲─────────────────────────╱
                           │ YES
                           ▼         S20
              ╱─────────────────────────╲
    NO       ╱        VEHICLE            ╲
◄────────────     SPEED IS LESS          
             ╲   THAN OR EQUAL TO        ╱
              ╲     THRESHOLD           ╱
               ╲        ?              ╱
                ╲────────────────────╱
                           │ YES
                           ▼         S30
              ╱─────────────────────────╲
             ╱         BRAKE             ╲
    NO      ╱      FREQUENCY IS           ╲
◄───────────     GREATER THAN             
            ╲   THRESHOLD a AND          ╱
             ╲    LESS THAN             ╱
              ╲   THRESHOLD b          ╱
               ╲       ?              ╱
                ╲────────────────────╱
                           │ YES
                           ▼         S40
              ╱─────────────────────────╲
   YES       ╱      DIRECTION           ╲
◄────────────     INDICATOR HAS          
             ╲     OPERATED ?           ╱
              ╲─────────────────────────╱
                           │ NO
        S60                ▼         S50
┌────────────────┐   ┌──────────────────────┐
│     OTHER      │   │  PARKING ASSISTANCE  │
└────────────────┘   └──────────────────────┘
        │                     │
        └─────────────────────┤
                              ▼
                    ┌─────────────┐
                    │     END     │
                    └─────────────┘
```

Europäisches
Patentamt

European
Patent Office

Office européen
des brevets

**EUROPEAN SEARCH REPORT**

Application Number

EP 12 18 5981

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/122136 A1 (SHIRAISHI TATSUYA [JP] ET AL) 14 May 2009 (2009-05-14) * figures 47,53,54 * | 1-13 | INV. G08G1/16 B60K31/00 G06T7/00 |
| A | US 2008/088707 A1 (IWAKI HIDEKAZU [JP] ET AL) 17 April 2008 (2008-04-17) * paragraphs [0014], [0038], [0039], [0043] * | 1-13 | |
| A | US 2007/255480 A1 (SOUTHALL JOHN B [US] ET AL SOUTHALL JOHN BENJAMIN [US] ET AL) 1 November 2007 (2007-11-01) * paragraph [0038] - paragraph [0046] * | 1-13 | |
| A | US 2006/187304 A1 (SAKATA RYUJI [JP]) 24 August 2006 (2006-08-24) * figure 1 * | 1-13 | |
| A | US 2005/280520 A1 (KUBO SHUNITSU [JP]) 22 December 2005 (2005-12-22) * figure 1 * | 10 | TECHNICAL FIELDS SEARCHED (IPC) G08G B60K G06T |

The present search report has been drawn up for all claims

| Place of search | Date of completion of the search | Examiner |
|---|---|---|
| The Hague | 13 February 2013 | Créchet, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 12 18 5981

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2013

| Patent document cited in search report | | Publication date | Patent family member(s) | | Publication date |
|---|---|---|---|---|---|
| US 2009122136 | A1 | 14-05-2009 | CN | 101223416 A | 16-07-2008 |
| | | | EP | 1909064 A1 | 09-04-2008 |
| | | | JP | 2007024590 A | 01-02-2007 |
| | | | US | 2009122136 A1 | 14-05-2009 |
| | | | WO | 2007007906 A1 | 18-01-2007 |
| US 2008088707 | A1 | 17-04-2008 | EP | 1881450 A1 | 23-01-2008 |
| | | | US | 2008088707 A1 | 17-04-2008 |
| | | | WO | 2006121087 A1 | 16-11-2006 |
| US 2007255480 | A1 | 01-11-2007 | US | 2007255480 A1 | 01-11-2007 |
| | | | WO | 2007124502 A2 | 01-11-2007 |
| US 2006187304 | A1 | 24-08-2006 | JP | 2006224873 A | 31-08-2006 |
| | | | US | 2006187304 A1 | 24-08-2006 |
| US 2005280520 | A1 | 22-12-2005 | DE | 102005026693 A1 | 08-06-2006 |
| | | | JP | 2006001369 A | 05-01-2006 |
| | | | US | 2005280520 A1 | 22-12-2005 |

EPO FORM P0459

For more details about this annex : see Official Journal of the European Patent Office, No. 12/82

**EP 2 579 231 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003348575 A
- JP 2011221995 A
- JP 2012155413 A